**Europäisches Patentamt**

**European Patent Office**

**Office européen des brevets**

(11) Veröffentlichungsnummer : **0 479 767 A1**

(12) **EUROPÄISCHE PATENTANMELDUNG**

(21) Anmeldenummer : **91890232.1**

(22) Anmeldetag : **02.10.91**

(51) Int. Cl.$^5$ : **F16B 12/46, F16B 12/10, F16B 3/00**

(30) Priorität : **03.10.90 AT 1992/90**

(43) Veröffentlichungstag der Anmeldung : **08.04.92 Patentblatt 92/15**

(84) Benannte Vertragsstaaten : **CH DE DK FR IT LI SE**

(71) Anmelder : **Katteneder, Wolfgang
Puchberg 10
A-4322 Rechberg (AT)**

(72) Erfinder : **Katteneder, Wolfgang
Puchberg 10
A-4322 Rechberg (AT)**

(74) Vertreter : **Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz (AT)**

(54) **Gehrungsverbindung.**

(57) Eine Gehrungverbindung (1) weist eine Gehrungsstoß (4) auf, der mit einer wenigstens eine Nut-Zapfenpaarung (5a, 5b) bildenden Profilierung aus eckkantenparallelen Erzeugenden versehen ist.

Um diese Verbindung auch bei Massigvholzteilen od.dgl. optimal einsetzen zu können, ist die Nut-Zapfenpaarung (5a, 5b) großteils innerhalb der durch eine quer zum Gehrungsstoß (4) gelegte Diagonalebene (9) entstehenden innereckseitigen Hälfte (8a) des aus einer gedachten geradlinigen Verlängerung der beiden zusammenzusetzenden Teile (2, 3) sich ergebenden Überdeckungsbereiches (8) angeordnet.

FIG.1

EP 0 479 767 A1

Die Erfindung bezieht sich auf eine Gehrungsverbindung zum winkeligen Zusammensetzen insbesondere von Massivholzteilen, mit einem Gehrungsstoß, der eine wenigstens eine ineinandergreifende Nut-Zapfenpaarung bildende Profilierung aus eckkantenparallelen Erzeugenden aufweist.

Unter Gehrungsverbindung wird vor allem im Möbelbau ein winkeliges Zusammensetzen von Teilen entlang einer schrägen Stoßfläche verstanden, so daß die Außen- und Innenseiten der Teile unmittelbar aneinanderstoßen und Innen- und Außeneckkanten ohne sichtbare Stirnflächen entstehen. Um dies zu erreichen, gibt es bisher neben den glatten, ebenen Gehrungsverbindungen, die allein auf Grund der Verleimung oder nur unter zusätzlicher Verwendung von Dübeln zusammenhalten, sogenannte Gehrungsfedern oder Winkelfedern, die durch Einleimen von einfachen oder winkeligen Federteilen in Gehrungsnuten die Verbindung durch Formschluß unterstützen, was aber ebenfalls zu keiner wesentlichen Verstärkung führt und außerdem zusätzliche Verbindungsteile erfordert. Darüber hinaus gibt es auch bereits das sogenannte Gehrungsverleimprofil, bei dem in der Gehrungsfläche eine durchlaufende Nut-Zapfenprofilierung eingefräst ist. Dieses Profil ist nicht selbsthemmend und muß ebenfalls verleimt und verpreßt werden. Es eignet sich wegen der gleichmäßigen Ausbildung und Anordnung der Nuten und Zapfen entlang der Gehrungsfläche ausschließlich für gleichmäßig strukturierte Materialien, wie Span- und Faserplatten, nicht aber für Massivholz oder ähnliche Materialien, die stark richtungsabhängige Eigenschaften aufweisen. Bei Massivholzteilen u.dgl. wäre durch die gleichmäßige Nut-Zapfenanordnung die Bruchgefahr der Verbindung durch ein Abscheren des Vorholzes, d.i. der stirnseitig der Nut vorgeordnete Materialbereich, für einen praktischen Einsatz viel zu groß.

Zusätzlich zu diesen Gehrungsverbindungen, bei denen die Nut- und Zapfenprofilierung eckkantenparallel verläuft und daher auch durchgehend hergestellt werden kann, gibt es auch noch die Gehrungszinkenverbindungen, die zwar eine stabile Verbindung darstellen, aber deren normal zu den Eckkanten ausgerichtete Zinken- und Schwalbenschwanzteile eine sehr aufwendige und für einen industriellen Einsatz zu unwirtschaftliche Herstellung mit sich bringen.

Eine sehr gute, auch für Massivholzteile geeignete Verbindung ist weiters die sogenannte Gratverbindung, bei der die miteinander zu verbindenden Teile über durchgehende, schwalbenschwanzartige Nut-Federprofile zusammengesteckt werden. Die Gratfeder ist hier stirnseitig an dem einen Teil und die Gratnut an der Innenfläche des anderen Teils vorgesehen, so daß bei einer solchen Verbindung ein über den Eckbereich vorstehender, das Vorholz für die Nut bildender Materialabschnitt verbleiben muß. Die zur Verfügung stehende Vorholzbreite kann die auftretenden Belastungen aufnehmen und ein Abscheren des Vorholzes verhindern.

Der Erfindung liegt daher die Aufgabe zugrunde, diese Mängel zu beseitigen und eine Gehrungsverbindung der eingangs geschilderten Art zu schaffen, die vergleichsweise rationell herstellbar ist, weitgehend unabhängig vom Material, insbesondere aber auch bei Massivholz u.dgl. inhomogenen Werkstoffen angewendet werden kann und sich durch ihre besondere Festigkeit auszeichnet.

Die Erfindung löst diese Aufgabe dadurch, daß die oder zumindest eine Nut-Zapfenpaarung großteils innerhalb der durch eine quer zum Gehrungsstoß gelegte Diagonalebene entstehenden innereckseitigen Hälfte des aus einer gedachten geradlinigen Verlängerung der beiden jeweils zusammenzusetzenden Teile über die Gehrung hinaus ergebenden Überdeckungsbereiches dieser Teile angeordnet ist. Durch das Einwärtsrücken der Nut-Zapfenpaarung in den Innereckbereich wird trotz des Gehrungsstoßes Platz für eine genügende Vorholzbreite gewonnen und damit die gewünschte Festigkeit und Stärke der Verbindung erreicht. Dabei ist es nicht notwendig, die Nut-Zapfenpaarung vollständig in dieser innereckseitigen Hälfte unterzubringen, es genügt wenn beispielsweise bei größeren Zapfen nur dessen Basis darin liegt und etwa der Zapfen selbst über die Diagonalebene vorragt. Da das Zapfenprofil im Vergleich zum Vorholz nur schmal zu sein braucht, um die auftretenden Belastungen in der Eckverbindung aufzunehmen und auch das Vorholz zusammen mit der auf Grund des Gehrungsstoßes gegebenen Abstützung durch den benachbarten Teil in der Lage ist, recht starken Scherkräften stanzuhalten, sind überraschend hohe Festigkeitswerte der Verbindung gewährleistet. So ist es auch möglich, Eckverbindungen mit verhältnismäßig geringen Wandstärken der zusammenzusetzenden Teile herzustellen oder neben einstückigen Holzteilen auch aus mehreren kleinen Einzelstücken zusammengeleimte Teile miteinander zu verbinden. Das durchlaufende Profil erlaubt weiters eine durchgehende Bearbeitung der Stoßflächen mittels entsprechender Fräser und es besteht grundsätzlich keine besondere Vorshrift für die eigentliche Form der Nut- und Zapfenprofilierung, die sich daher auch an die jeweiligen Gegebenheiten gut anpassen läßt. Dazu wäre es durchaus möglich, nicht nur eine Nut-Zapfenpaarung vorzusehen, sondern auch zwei oder mehr, wenn entsprechend starke Teile zusammenzusetzen sind, wobei wiederum durch die entlang der Hauptgehrungsrichtung gegeneinander versetzte Anordnung der Paarungen für jede Nut ein entsprechend breites Vorholz ver- bleibt, das jeweils dem durch den verhältnismäßig schmalen Zapfen ausgeübten Abscherdruck widerstehen kann.

Besonders günstig ist es, wenn erfindungsgemäß die Nut-Zapfenpaarung in an sich bekannter Weise eine Hinterschneidung bildet, so daß sich eine selbsthaltende Gehrungsverbindung ergibt. Die spezielle Anordnung der Nut-Zapfen paarung und die Dimensionsunterschiede zwischen Zapfenstärke und Vorholzstärke erlauben

2

es, die Nut-Zapfenpaarung zu hinterschneiden, ohne die Festigkeit der Verbindung zu schwächen. Selbstverständlich kann diese Verbindung nun verleimt oder unverleimt Verwendung finden und es eröffnen sich für den industriellen Anwendungsbereich wesentliche Vorteile. Möbelstücke brauchen nämlich nicht mehr im Herstellungswerk fertiggestellt zu werden, es genügt die Vorfertigung der Einzelteile und deren einfacher Zusammenbau am Einsatzort, wozu es ja keiner Preßwerkzeuge und nicht einmal einer Verleimung bedarf. Es verbleibt ein seitliches Zusammenstecken der Teile und die gegenseitige Verschiebesicherung ergibt sich durch eine Verbindung mit einer Rückwand, durch ein Zusammenwirken mehrerer Verbindungen bei einem geschlossenen Rahmen u.dgl. Die Herstellung und auch der Transport und das Aufstellen von Möbelstücken mit solchen Gehrungsverbindungen lassen sich so wesentlich rationalisieren, wozu noch kommt, daß durch die formschlüssige und selbsthaltende Verbindung sogar ein Werfen und Verziehen des Holzes weitgehend unterbunden wird. Auf Grund einer derartigen hinterschnittenen Nut-Zapfenpaarung entsteht gewissermaßen ein Gehrungsgrat, also eine Kombination aus einer üblichen Gehrungsverbindung und einer Gratverbindung wobei diesem Gehrungsgrat alle Einzelvorteile der Gehrungsund Gratverbindung zukommen.

Um das Vorholz weiter zu stärken und die Belastbarkeit zu erhöhen, kann der Gehrungsstoß von der Außeneckkante unter einem Gehrungswinkel ausgehen, der am nutseitigen Teil größer als 45° ist und gegebenenfalls zum Nutprofil hin in einer konvexen Krümmung verläuft. Durch diesen Gehrungsverlauf gewinnt der wichtige Vorholzbereich zusätzlich an Matarialstärke und der Abschergefahr für das Vorholz wird besser vorgebeugt.

Besitzen die Nut- und Zapfenprofile abgerundete Übergänge, werden Spannungsspitzen an den entstehenden Ecken abgebaut und für eine Vergleichmäßigung der Belastungen über die Gehrungsfläche gesorgt.

Die erfindungsgemäße Gehrungsverbindung eignet sich vor allem für Massivholztele, für Mehrschichtplatten oder Paneelplatten od. dgl. Holzwerkstücke, sie kann aber selbsterständlich auch bei Werkstücken anderer Werkstoffe, beispielsweise bei Kunststoffteilen usw. angewendet werden. Sind darüber hinaus eigene, die Nut- oder Zapfenprofilierung aufweisende und als Endstücke an den zusammenzusetzenden Teilen befestigbare Verbindungsklötze vorgesehen, lassen sich diese Verbindungsklötze aus besonders geeigneten Werkstoffen herstellen und dann damit Teile aus beliebigem Material ausstatten und verbinden. So können auch Spanplatten od.dgl. gehrungsverbindungsgerecht ausgestattet werden, die selbst eine entsprechende Profilierung nicht oder nur schwer erlauben.

In der Zeichnung ist der Erfindungsgegenstand rein schematisch veranschaulicht, und zwar zeigen

Fig. 1 eine erfindungsgemäße Gehrungsverbindung in Draufsicht und die

Fig. 2 - 9 verschiedene Ausführungsbeispiele einer solchen Gehrungsverbindung ebenfalls in Draufsicht.

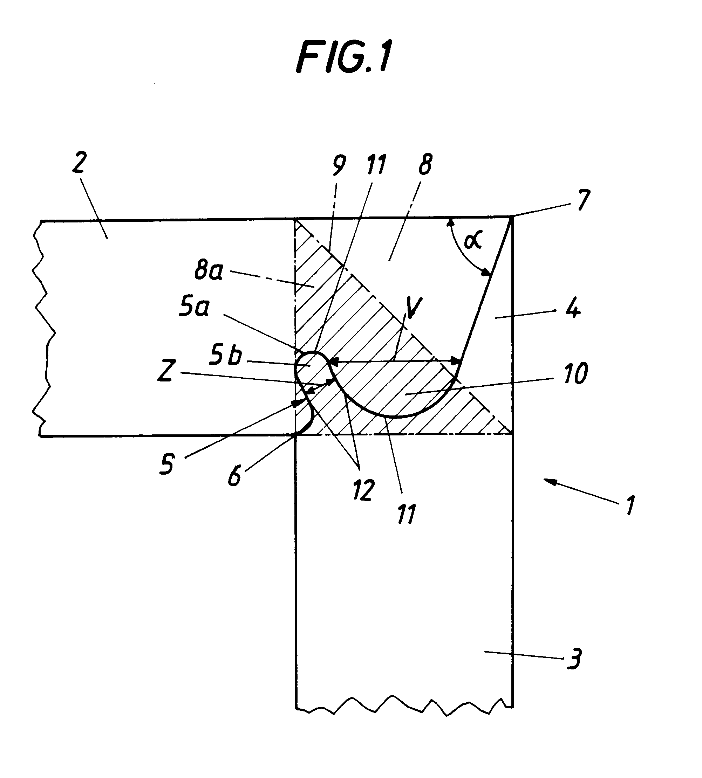

Eine Gehrungsverbindung 1 zum winkeligen Zusammensetzen zweier Teile 2, 3, insbesondere aus Massivholz, weist einen Gehrungsstoß 4 auf, der eine durchlaufende Nut-Zapfenprofilierung 5 bildet. Wie in Fig. 1 angedeutet, ist dabei die ineinandergreifende Paarung aus Nut 5a und Zapfen 5b asymmetrisch zwischen der Inneneckkante 6 und der Außeneckkante 7 angeordnet, und zwar liegt sie im wesentlichen in der innereckseitigen Hälfte (schraffierte Fläche) 8a des durch eine geradlinige gedachte Verlängerung der Teile 2, 3 sich ergebenden Überdeckungsbereiches 8, der durch eine quer zur Gehrung 4 gelegte Diagonalebene (strichpunktierte Linie) 9 halbiert wird. Durch diese Anordnung ergibt sich gegenüber der Stärke Z des Zapfens 5b eine mehrfach größere Stärke V des Vorholzes 10, so daß bei Belastung der Gehrungsverbindung 1 die vom Zapfen 5b auf das Vorholz 10 ausgeübte Scherwirkung nicht zum Bruch führen kann.

Um die Belastungen entlang des Gehrungsstoßes 4 zu vergleichmäßigen, besitzt die Nut- und Zapfenprofilierung 5 abgerundete Übergänge 11 und zur Vergrößerung der Vorholzstärke V ist der Gehrungswinkel $\alpha$ am nutseitigen Teil 2 großer 45°.

Um eine selbsthaltende Verbindung zu erreichen, kann die Nut-Zapfenprofilierung 5 einem Hinterschneidungsbereich 12 aufweisen, so daß zum Zusammensetzen der Teile 2, 3 keine Preß- oder Spannwerkzeuge notwendig sind und die Verbindung auch ohne Verleimung zusammenhält.

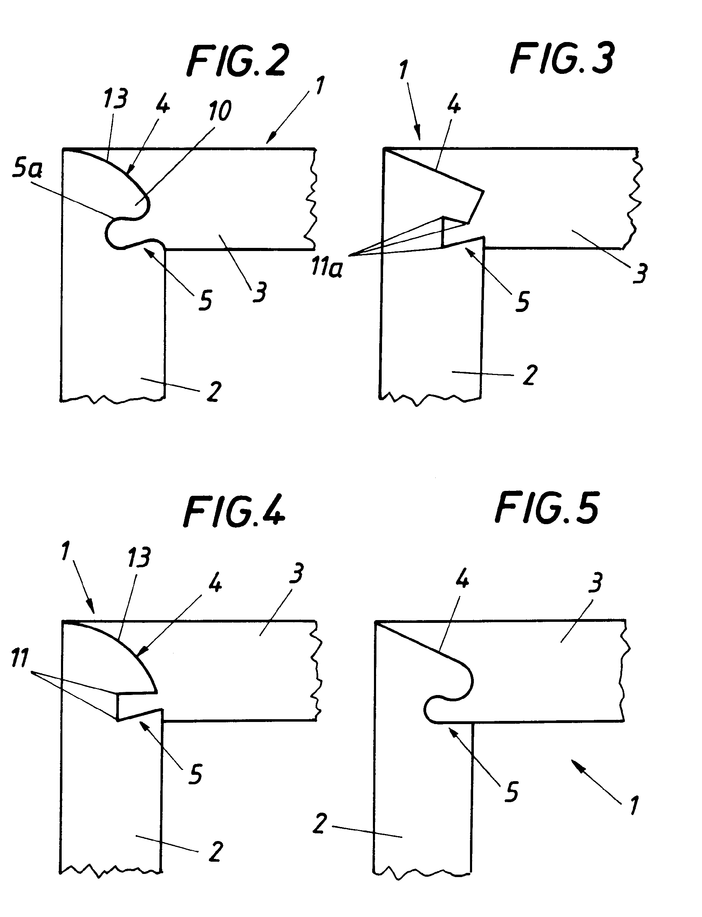

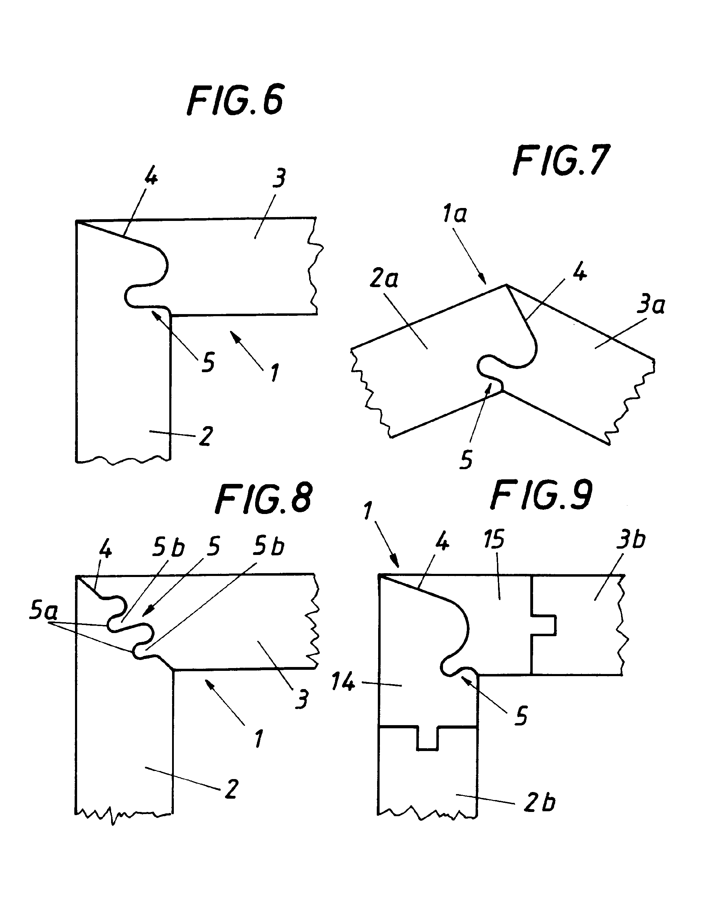

Die Gehrungsverbindung 1 ist nicht auf eine bestimmte Profilierung eingeschränkt, sondern diese Profilierung läßt sich an die jeweiligen Verhältnisse anpassen, wobei allerdings zumindest eine Nut-Zapfenpaarung im Nahbereich der Inneneckkante 6 angeordnet sein muß, um die antsprechende Vorholzstärcke V sicherzustellen. So kann, wie in Fig. 2 angedeudet, der Gehrungsstoß 4 von der Nut 5a zur Außeneckkante 7 hin eine dem nutseitigen Teil 2 gegenüber bonvexe Krümmung 13 bilden, um sie Stärke des Vorholzes 10 weiter zu vergrößern. Auch kann, wie in Fig. 3 angedeutet, die Gehrungsverbindung 1 Nut- Zapfenprofile 5 mit kantigen Übergängen 11a der, wie in Fig. 4 angedeutet, eine kantige Nut-Zapfenprofilierung 5 und eine gekrümmte Stoßfuge 13 aufweisen. Gemäß Fig. 5 ist eine Gehrungsverbindung mit einer rechtwinkelig ingeschnittenen Nut 5a vorgesehen und Fig. 6 zeigt eine Nut-Zapfenprofilierung 5 ohne Hinterschneidung, die zum Zusammenhalten einer Verleimung bedarf. In Fig. 7 ist eine Gehrungsverbindung 1a zum stumpfwinkeligen Zusammensetzen zweier Teile 2a, 2b angedeutet und genauso könnte die Gehrungsverbindung auch für ein spitzwinkeliges Zusammensetzen dienen, und Fig. 8 zeigt eine Gehrungsverbindung 1b mit einer Nut-Zapfenprofilierung 5 aus zwei Nut-Zapfenpaaren 5a, 5b mit einer 45°igen Gehrung. Gemäß Fig. 9 sing eigene Verbindungsklötze 14, 15 mit den Nut- und Zapfenprofilierungen 5 vorgesehen, die als Endstücke auf die zusammenzusetzenden Teile 2b, 3b aufgeleimt werden und die Gehrungsverbindung von Teilen beliebigen Werkstoffes ermöglichen.

**Patentansprüche**

1. Gehrungverbindung (1) zum winkeligen Zusammensetzen insbesondere von Massivholzteilen, mit einem Gehrungsstoß (4), der eine wenigstens eine ineiandergreifende Nut-Zapfenpaaren (5a,5b) bidende Profilierung aus eckkanten-parallelen Erzeugenden aufweist, dadurch gekennzeichnet, daß die oder zuminsdest eine Nut-Zapfenpaarung (5a, 5b) großteils innerhalb der durch eine quer zum Gehrungsstoß (4) gelegte Diagonalebene (9) entstehenden innereckseitigen Hälfte (8a) des aus einer gedachten geradlinigen Verlängerung der beiden jeweils zusammenzusetzenden Teile (2, 3) über die Gehrung hinaus sich ergebeden
Überdeckungsbereiches (8) dieser Teile angeordnet ist.

2. Gehrungverbindung nach Anspruch 1, dadurch gekennzeichnet, daß die Nut-Zapfenpaarung (5a, 5b) in an sich bekannter Weise eine Hinterschneidung (12) bildet.

3. Gehrungverbindung nach Anspruch 1 oder 2, dadurch gekennzeichnet, daß der Gehrungsstoß (4) von der Außeneckkante (7) unter einem Gehrungswinkel ($\alpha$) am nutseitigen Teil (2) größer als 45° ist und gegebenenfalls zum Nutprofil (5a) hin in einer konvexen Krümmung (13) verlaüft.

4. Gehrungverbindung nach einem der Ansprüche 1 - 3, dadurch gekennzeichnet, daß die Nut- und Zapfenprofile (5a, 5b) abgerundete Übergänge (11) besitzen.

5. Gehrungverbindung nach einem der Ansprüche 1 - 4, dadurch gekennzeichnet, daß eigene, die Nut- oder Zapfenprofile (5) aufweisende und als Endstücke an den zusammenzusetzenden Teilen (2a, 3b) befestigbare Verbindungsklötze (14, 15) vorgesehen sind.

# FIG.1

## FIG.2

## FIG.3

## FIG.4

## FIG.5

## FIG.6

## FIG.7

## FIG.8

## FIG.9

EP 0 479 767 A1

Europäisches Patentamt

# EUROPÄISCHER RECHERCHENBERICHT

Nummer der Anmeldung

EP 91 89 0232

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 193 886 (WENGER,HENNE) | 1 | F16B12/46 |
| Y | * Abbildungen 1,2 * | 3,4,5 | F16B12/10 |
| | --- | | F16B3/00 |
| X | CH-A-450 693 (OERTLI & CO.) | 1 | |
| | * Abbildung 3 * | | |
| | --- | | |
| Y | DE-U-8 800 508 (PRO-JECT KUNSTSTOFFTECHNIK GMBH & CO. KG) | 3,4 | |
| | * Anspruch 1; Abbildungen 1,3 * | | |
| | --- | | |
| Y | FR-A-2 308 003 (ATELIERS PIERRE BOURGEOIS) | 5 | |
| | * Abbildung 1 * | | |
| | ----- | | |
| | | | **RECHERCHIERTE SACHGEBIETE (Int. Cl.5 )** |
| | | | F16B |

Der vorliegende Recherchenbericht wurde für alle Patentansprüche erstellt

| Recherchenort | Abschlußdatum der Recherche | Prüfer |
|---|---|---|
| DEN HAAG | 08 JANUAR 1992 | JONES C.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)

8